# EUROPEAN PATENT APPLICATION

(11) **EP 4 628 468 A1**
(43) Date of publication of application: **08.10.2025**
(21) Application number: 24382353.1
(22) Date of filing: 05.04.2024
(51) Int. Cl.: C04B 28/04, C04B 18/24

(54) **BUILDING MATERIAL, BUILDING PRODUCT AND METHOD FOR OBTAINING BUILDING PRODUCTS**

(71) Applicant: Cuadern Campanals Arquitectes, S.L.P., 08013 Barcelona (ES)
(72) Inventor: CUADERN CODINA, Albert, 08013 Barcelona (ES); CAMPANALS FOZ, Immaculada, 08013 Barcelona (ES); CUADERN CAMPANALS, Eduard, 08027 Barcelona (ES); CUADERN CAMPANALS, Ignasi, 08009 Barcelona (ES)
(74) Representative: ZBM Patents - Zea, Barlocci & Markvardsen

(57) **Abstract**

Building material comprising rice husk, water, and binder, the rice husk being raw rice husk, wherein the weight ratio between binder and rice husk is between 1:1 and 5:1, the building material having a thermal conductivity of 0.2 W/mK or lower when it reaches a hardened state.

## Description

The present disclosure relates to a building material, a building product and a method for obtaining building products.

### BACKGROUND

Creating a comfortable shelter has always been a challenge. From caves in the Stone Age to modern Passivhaus designs, construction has been under constant evolution. Different building materials and building products can be used for the construction of shelters. For example, prefabricated building blocks are suitable for constructing walls, while at the same time, concrete can be cast in situ to build walls, floors and roofs. Concrete represents a pivotal advancement in building materials since the Industrial Revolution, profoundly transforming the construction industry. Currently, concrete is widely used in the construction of nearly any type of structure, even including prototype housing on Mars.

Concrete conventionally comprises cement, fine aggregates (such as sand or gravel), coarse aggregates (like rock fragments), and water. Among these, cement is an artificial binding material, while the other three are commonly inorganic matters sourced from nature.

Cement comprises clinker, which is manufactured from clay and limestone under high temperatures.

Clinker production is environmentally adverse, involving extensive limestone mining and clay excavation, which releases harmful substances like CO₂ into the air and water. These substances have harmful long-term environmental consequences. Furthermore, concrete demolition generates vast non-decomposable waste, occupying extensive land areas.

Substituting polluting building materials with sustainable alternatives is crucial to address these issues.

In addition, the European Union launched the 'European Green Deal' in 2020, to achieve net-zero greenhouse gas emissions by 2050. As part of this initiative, a 'Sustainable Products' policy is introduced, focusing on reducing material wastage and promoting reuse and recycling. This policy targets industries like construction industries to ensure that they adopt sustainable practices throughout the lifecycle of construction industries, with cement and related products like concrete being a key focus due to their high global consumption.

Some building materials may now incorporate a proportion of plant fibres, or plant ashes, thus making these materials more sustainable. However, e.g. ashes are still not very sustainable. Furthermore, the physical and mechanical properties of these known building materials are poor, and they generally require complex and costly manufacturing methods, such as applying pressure and/or heat to obtain suitable building blocks, slabs, or the like.

The present disclosure provides a building material, a building product and a method for obtaining building products that at least partially resolve some of the aforementioned disadvantages while being suitable in construction.

### SUMMARY

In a first aspect, a building material is provided. The building material comprises raw rice husks, binder, and water. The weight ratio between binder and rice husk is between 1:1 and 5:1. The building material has a thermal conductivity of 0.2 W/mK or lower, specifically less than 0.08 W/mK, when it reaches a hardened state. The thermal conductivity of the material is suitable for providing good insulation when used in construction of buildings such as walls, floors, etc.

A suitable proportion among rice husks, binder and water allows for achieving a thermal conductivity of the hardened building material as low as 0.2 W/mK or lower, specifically less than 0.08 W/mk, in the present disclosure. The thermal conductivity of the disclosed building material is lower than conventional concrete. In conventional concrete, the thermal conductivity in its hardened state decreases as the water-to-cement ratio increases. However, there exists a limit to the amount of water that can be added to maintain a desired level of mechanical strength. Consequently, the thermal conductivity of conventional concrete typically falls within the range of 2.0-3.0 W/mK. It signifies that buildings comprising the disclosed building material insulate heat better than buildings made from conventional concrete. Therefore, at least from the thermal insulation perspective, the disclosed building material is more sustainable than conventional concrete.

The building material undergoes different physical states. Initially, when the components of the building material are mixed, the building material exhibits a plastic state. As reactions among the components progress, after a certain amount of time, the building material finally transforms into a hardened solid material. The hardened solid building material provide mechanical resistance to structures made of it. In the present disclosure, the hardened state is the state after the building material solidifies into a solid body, undergoes drying, and reaches a condition suitable for use in buildings. The solid body of the building material is formed as disclosed here, for example, first forming a mixture by mixing rice husks, binder and water, secondly pouring the mixture into an open mould, subsequently allowing the mixture to harden in the mould at ambient temperature to form a body without additional heat supply and/or air ventilation and/or external pressure, then removing the body from the mould and let the product to dry at ambient temperature in contact with air without additional heat supply and/or air ventilation and/or external pressure.

The building material of the first aspect comprises rice husks. Rice husk is a natural organic material abundantly generated as a by-product of rice harvesting. In 2022, the global rice production exceeded 776 million tons, with the majority harvested in countries or regions with mild climates, such as Spain. Rice husk comprises approximately 20% of the weight of rice. In its natural state before harvesting, rice husk comprises 50% cellulose, 25%-30% lignin, 15%-20% silica and 10%-15% moisture by weight. The applicant has found that rice husks is a material suitable for forming composite materials with binders like cement, granting the composite material with a mechanical strength enough for its use as a building material for at least some applications in construction, i.e., not only as a coating, but also as enclosure material. For example, building products comprising the hardened building material can be used to build walls or floors and resist the mechanical forces in these structures. The mechanical strength may be due to the high content of silica of the rice husks.

The building material has a mechanical strength of at least 0.4 MPa. This mechanical strength allows the material to be used as a thermal insulation building material in combination with other building materials. The thermal conductivity of the building material allows the use of the building material as an infill wall, or as an envelope or enclosing in a construction, without the need of having an additional thermal isolating layer in addition to the layer of building material. This is an advantage over building materials comprising a small proportion of plant fibres, which can be more eco-friendly than traditional concrete and can be used as a coating for buildings but do not offer enough mechanical strength and thermal conductivity to be used as a structural material. In an example, the building material of the present disclosure has a mechanical strength of at least 0.8 MPa. The mechanical strength of the building material is higher as higher is the binder to rice husk ratio.

The terms "rice husk" and "rice hull" refer to the hard-protecting shell, chaff or covering of grains of rice. As an agricultural by-product, rice husks are typically discarded as waste through burning, contributing to air pollution and CO₂ emission. A building material comprising rice husk allows the reuse and recycling of a by-product material, increasing the sustainability of the building material.

Furthermore, it has been found that the irregular shape of the natural, raw rice husk provides excellent thermal insulation properties to the building material. Depending on the moisture content and porosity ratio, the thermal conductivity of stacked rice husks ranges from 0.02 to 0.09 W/mK. Utilizing rice husks in forming the disclosed building material contributes to achieving the low thermal conductivity of the hardened building material. The low thermal conductivity of the disclosed building material is also enabled by the present method for obtaining building products, which does not involve applying external pressure to the building products. When the building material is used to construct buildings, the buildings might require less additional energy input to provide temperature comfort to the occupants.

The rice husks used in the disclosed building material are in their raw form. According to the present disclosure, "raw rice husk" is to be understood as whole rice husk or whole rice hull, rice husk as it is harvested, and any rice husk that does not undergo an alteration of its physical shape through cutting, crushing, or similar processes, nor a modification of its chemical composition by adjusting the temperature or adding other components to react with it. However, the mere drying of the rice husk before use, or changes in the shape of rice husks due to fluctuations in ambient conditions and pressure during storage and transportation are not considered part of these alterations.

Raw rice husks are much more sustainable than rice husk ash. Rice husk ash, normally obtained from burning rice husks, can be used as an additional component in concrete mixtures. Compared with using raw rice husks directly, the production of rice husk ash still involves a highly polluting burning process, significantly contributing to CO₂ emissions.

The building material of the first aspect of the present disclosure comprises a binder. Examples of binders include cement, hydraulic lime, and ash lime, among others.

In some examples, specific types of cement from the five categories defined in EN 197-1:2011, i.e. CEM I to CEM V are utilized. CEM I, also known as ordinary Portland cement, is characterized by its high content of clinker, which is around 95-100%, without other components added except unavoidable impurities. Compared with CEM I cement, CEM II to CEM V cement substitutes clinker with by-products or waste from other industries, like fly ash, or natural resources like pozzolana and ground limestone. Compared with cement CEM I, cement comprising both clinker and additional components is preferable. These additional components make CEM II to CEM V more sustainable than CEM I. Compared with cement of type CEM III or CEM V, cement of type CEM II or CEM IV contains more clinker and therefore guarantees a higher mechanical strength of the building products made of it. For instance, using pozzolana cement, categorized as CEM II, can reduce the embodied energy of the building product made of it and ensure the mechanical strength of the building product. However, this does not limit the possibility of using other potential binders suitable for the disclosed building material. For example, cement incorporating alternative components up to 50% by weight, could also be effective. The alternative components can be, for example, ground limestone and/or pozzolana A building material comprising rice husks, water and cement comprising clinker and at least limestone and/or pozzolana can reach a hardened state in a relatively short time, which increases the turnover rate of the building material production. The building material production involves at least site and tool occupation, and a high turnover rate normally means a higher production rate and economic benefit.

The building material of the first aspect of the present disclosure is eco-friendly at least due to:
1) the incorporation of natural materials or industrial wastes in the binder. For example, instead of using ordinary Portland cement with a high content of clinker, cement comprising alternative components such as ground limestone can be used.
2) the use of raw rice husks to form the building material, thus preventing the need for the burning or otherwise treating of rice husks, and thereby reducing the CO₂ emissions.
3) the significant presence of organic substances, in this case, rice husks, making the disclosed building material more susceptible to decomposition compared to conventional concrete when the building material has to be recycled.
4) the rice husks helping to achieve a low thermal conductivity of the hardened building material. When using the building material to construct buildings, there is less dependence on additional energy supply to moderate the interior temperature of these buildings.

The disclosed building material can be cast in situ to obtain building products such as walls, roofs and floors. The disclosed building material can be used as an enclosure or as a coating for said walls, roofs and floors. Walls, roofs and floors can comprise other building products, both also cast in situ or prefabricated, alongside the building product disclosed in the present disclosure. At the same time, the building material can also be used to prefabricate building products including building blocks and building panels, etc. These building products provide good acoustic insulation properties and thermal insulation properties in addition of being an eco-friendly product. These building products can be formed into various shapes to accommodate their intended use, such as a rectangular cuboid. The building material of the present disclosure may therefore be used as an insulation layer or insulation panels and as a complement to conventional walls, and can also be used to resist mechanical forces, for example as a structural enclosure wall in low-rise buildings.

The building material may comprise other components in addition to rice husks, binder, and water. The building material may comprise fine aggregates such as sand or gravel. By adding fine aggregates, the mechanical resistance of the building material increases, while maintaining a thermal conductivity that allows the building material to resist heat and be eco-friendly. A building product comprising raw rice husks, water, binder, and a fine aggregate such as sand, can be used as a structural material. This building product can therefore be used to better support the mechanical load of a structure or a roof. Low-volume aggregates such as sand are preferred as a fine aggregate due to their low volume.

In a second aspect, a building product comprising the disclosed building material is provided. Building products, such as building blocks, comprising the disclosed building material, have high thermal insulation and acoustic insulation properties, suitable for the construction of walls, roofs and floors and as a complement to conventional walls. The building products according to the second aspect are suitable for their use as a thermal and acoustic insulation material, as well as a building envelope or enclosure, both as an internal wall or as an external wall. These building products can comprise building blocks and building panels, etc. The shape and the type of the building product is not limited to any of these products.

In a third aspect, a method for obtaining building products, for example with the building material according to the first aspect, is also provided. This method comprises the following steps:
- Mixing rice husks, cement, and water, forming a mixture. The cement is not limited to ordinary Portland cement.
- Placing the mixture in an open mould. A "mould" is a shaped cavity used to give a definite form to fluid or plastic material. In the present disclosure, the expression "mould" encompasses "formwork" to form building products in situ. An open mould indicates that it is not enclosed and has at least one opening for the mixture to be poured into the mould.
- Allowing the mixture to harden at ambient temperature, forming a building product. Ambient temperature means there is no need for an external heat supply during the aforementioned process. Harden refers to the process of becoming solid. The fresh mixture has a plastic state, and at the end of this hardening process, the obtained building product exhibits a solid state.

In this step, it is not necessary to apply any external pressure on the building product or compact it with tools or machines to facilitate the hardening of the building product. This simplifies the hardening process and eliminates the necessity for a power supply. Although applying external pressure might enhance the mechanical strength of the building product, it reduces the porosity and requires a longer hardening time for the building product. In other words, applying any external pressure on the building product increases its thermal conductivity, and thereby sacrificing its sustainability.
However, in certain conditions, particularly when the air relative humidity is high, controlled mechanical ventilation can be used to accelerate the hardening process of the building product in the mould.
   - Unmoulding the building product from the mould. Unmoulding signifies that the building product is taken out from the mould, or the mould is removed from the building product.
   - Allowing the unmoulded product to dry at ambient temperature in contact with air.
In certain conditions, such as when the method is employed in a cold region, additional heat may be applied to the unmoulded blocks to accelerate the drying process.

In the first step of this method, or mixing step, when any suitable proportion among the components according to the first aspect of this disclosure is adopted, the obtained building products are expected to have a high porosity and a thermal conductivity of 0.2 W/mK or lower, specifically less than 0.08 W/mk.

Some of the steps may be combined in a single step or may be further subdivided. For instance, the first step may comprise initially pre-mixing rice husk and cement to create a dry mixture, and subsequently adding water to it. In certain circumstances, additional steps might be added. For example, in environments with low relative air humidity, placing a concrete curing blanket over the open mould can assist in preserving a certain level of moisture within the product.

Methods according to the present disclosure do not require providing pressure or heat for building products to harden and gain strength. In contrast, in many other methods to produce building products, such as producing clay bricks, it is indispensable to heat the mixture for several hours at temperatures exceeding 1000 °C in kilns. During the heating process, a large amount of CO₂ is released, along with other contaminating substances. The disclosed method does not require a heating process; thus, it avoids the production of environmentally harmful substances and is more sustainable.

### BRIEF DESCRIPTION OF THE DRAWINGS

Non-limiting examples and embodiments of the present disclosure will be described in the following, with reference to the appended drawings, in which:
Figure 1 is a schematic representation of a building material comprising rice husks, binder and water, according to the first aspect of the disclosure.
Figures 2A, 2B and 2C are schematic views of building products according to the second aspect of the present disclosure and their usage.
Figure 3 is a flow diagram of a method to obtain building products comprising rice husks, cement and water, according to the third aspect of the disclosure.

### DETAILED DESCRIPTION OF EMBODIMENTS

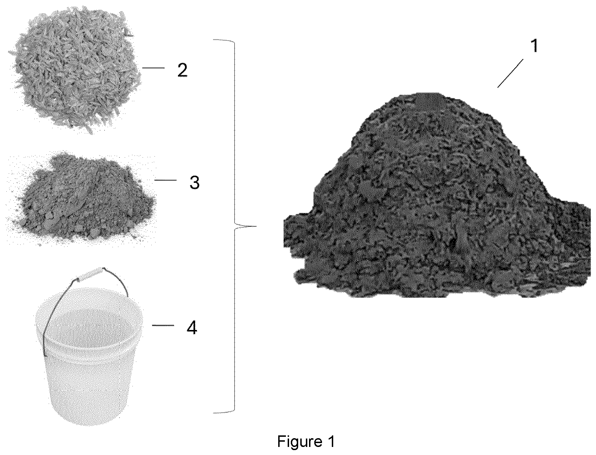

Figure 1 shows the building material 1 according to the first aspect of the disclosure. The building material 1 comprises rice husks 2, binder 3 and water 4. Rice husks 2, binder 3 and water 4 are the main components of the building material. The building material can also comprise other components. The rice husks 2 are bonded together by the binder 3 through a reaction between the binder 3 and the water 4. Various options are available for the binder 3, e.g. ash lime, hydraulic, or cement. The proportion among these three main components varies depending on the type of binder selected. The weight ratio between the binder 3 and the rice husks 2 is between 1:1 and 5:1. Because of the specific shape of the rice husks 2, they occupy more volume when stacked, contributing to the high porosity of the building material 1 once it is hardened. The thermal conductivity of the hardened building material 1 is as low as 0.2 W/mK or less.

In some examples, the weight ratio between the binder 3 and the rice husks 2 for the building material 1 is narrowed down to a range between 1.8:1 and 2.9:1, in some examples to a range between 1.8:1 and 2.5:1. This proportion range prevents the overuse of either the binder 3 or the rice husks 2 while maintaining its mechanical strength and thermal conductivity. An excessive use of the binder 3 can compromise the sustainability of the building material 1, whereas an abundance of the rice husks 2 poses a risk of reducing the mechanical strength of the building material 1. By narrowing down the component proportion range, a balance between sustainability and mechanical strength is achieved.

In some examples, the proportion in weight of the building material is specified as the following: 20% rice husks 2, 40% binder 3, and 40% water 4, with a maximum tolerance of 5% allowed for each component. The total added proportion of these three components is 100%. This tolerance means that multiple combinations within this range are viable, as long as the total proportion remains at 100%. For instance, a weight proportion of 15% the rice husks 2, 42% the binder 3, and 43% the water 4 is acceptable. This proportion in weight is a proportion optimized and suitable for the line production of the building material 1 and building products comprising the building material 1, such as building blocks, at factories.

In some examples, the building material further comprises fine aggregates such as sand. The building material of this example has a thermal conductivity of 0.2 W/mK or lower when it reaches a hardened state while having better mechanical strength than a building material without fine aggregates. The proportion in weight of the building material is on the range of 8-18% rice husks, 24-36% binder, 32-45% water and 5-30% sand, the total added proportion of these components being 100%. For example, the proportion in weight of the building material is between 10-15% rice husks, 26-33% binder, 35-42% water and 8-27% sand. As the addition of fine aggregates adds volume to the building material, the building material comprising fine aggregates can comprise a lesser proportion of rice husk than the building material that does not comprise fine aggregates in order to obtain building products with the same volume with the same amount of binder in weight.

In some examples, the binder 3 is cement. The cement reacts with the other components through a hydrated reaction, in which clinker plays a vital role in reacting with water. This reaction transforms the mixture from a freshly plastic state to a final hardened state capable of sustaining relatively high loads, especially under compression.

There is a wide range of options available for cement types. In some examples, when the binder 3 is cement, instead of comprising a high content of clinker, the cement comprises alternative components, such as ground limestone or pozzolana. The production of clinker generates a significant amount of CO₂ emissions as well as other environmentally harmful substances. By reducing the use of clinker, the sustainability of the building material 1 is improved. Additionally, compared with other alternative components such as fly ash, ground limestone and/or pozzolana enable the hardening of the building material 1 in a considerably shorter period. If the time for building material 1 to reach a hardened state is excessively long, it could extend the construction timeline and causes the use of the building material 1 economically impractical.

In some examples, when the binder 3 is cement, as per EN 197-1:2011, several types of cement in the categories of CEM II and CEM IV can be adopted. To be more specific, the possible cement types are CEM II/B-P, CEM II/B-Q, CEM II/B-L, CEM II/B-LL, CEM II/B-M, CEM IV/A, and CEM IV/B.

CEM II/B-P and CEM II/B-Q denote Portland cement mixed with natural and calcined pozzolana, respectively. Both CEM II/B-L and CEM II/B-LL involve Portland cement mixed with ground limestone. CEM II/B-M comprises a blend of Portland cement with various components like blast furnace slag, silica fume, fly ash, ground limestone, calcined shale, and pozzolana. In all the listed examples of CEM II, substances other than clinker constitute between 21-35% of the total weight. Meanwhile, CEM IV/A and CEM IV/B comprise a mixture of pozzolana, silica fume, and fly ash, which collectively constitute 11-55% of the total cement weight.

The strength class of cement is based on the 28-day compressive strength of the concrete comprising that cement. As per EN 197-1:2011, there are six strength classes of cement, which are listed from low to high as 32.5N, 32.5R, 42.5N, 42.5R, 52.5N and 52.5R, where the numerical values represent the compressive strength and N/R refers to ordinary/high early strength, respectively. In some examples, when the binder 3 is cement, regardless of the early strength, the strength class of the cement used as the binder 3 is lower than 52.5.

By adjusting the iron-oxide content, cement can be produced in either grey or white colour. The preference for white cement over grey cement is often based on aesthetic considerations. White cement may also exhibit slightly higher early-age strength than grey cement, with both reaching similar final strength levels. At the same time, the building material comprising white cement has better plasticity in its fresh plastic state, which makes it easy to form any desired shape. Further, white cement has smaller particle sizes compared to grey cement, and the small particles of white cement could react with other components in a faster manner. As a consequence, building materials containing white cement tend to harden relatively quickly. Another significant advantage of white cement compared to its grey counterpart is that its production process restricts the excessive utilization of harmful components, additives, or fuels, prioritizing health and environmental concerns. Therefore, in some examples, white cement is used as the binder 3 to produce the building material 1.

In some examples, specific attributes tailored to particular scenarios are achieved by adding different types of additives. These additives are introduced as components additional to the three basic components shown in Figure 1 to form the building material 1. These additives could be, for example, aeration agents or phase-changing materials. Aeration agents, such as Sikamor^{®}-A, increase the porosity and reduce the density of the building material 1 when the building material 1 becomes hardened. Consequently, building products, such as building blocks, comprising the building material 1 and an aeration agent, are lighter and more porous and are thereby have better acoustic insulation and thermal insulation properties. Phase-changing materials can absorb and dissipate heat by undergoing physical state changes, for instance, transitioning from solid to liquid. Therefore, when the building material 1 comprising phase-changing materials is used to fabricate building products, such as building blocks, it enables the passive regulation of the interior temperature of a building enclosed by building products, such as building blocks. In an example, building materials comprise an aeration agent in a proportion in weight of 0.02% to 0.03% the weight of the binder. In an example, the building material comprises a phase-changing material in a proportion in weight of 10 to 30% the weight of the binder.

The building material 1 can be utilized not only for in-situ casting to obtain building products such as walls, roofs, and floors but also for the prefabrication of building products like blocks and panels. The shape of these building products comprising the building material 1 is not confined to rectangular cuboids, as long as the shape is suitable for forming structures including walls, roofs and floors. A structure might be construed with the building products having the same shape and dimension or by combining building products of various shapes and dimensions. The building products made from the building material 1 can serve as effective thermal and/or acoustic insulation for walls, roofs, and floors. Moreover, these building products can also function, for example, as interior partition walls or enclosing structures.

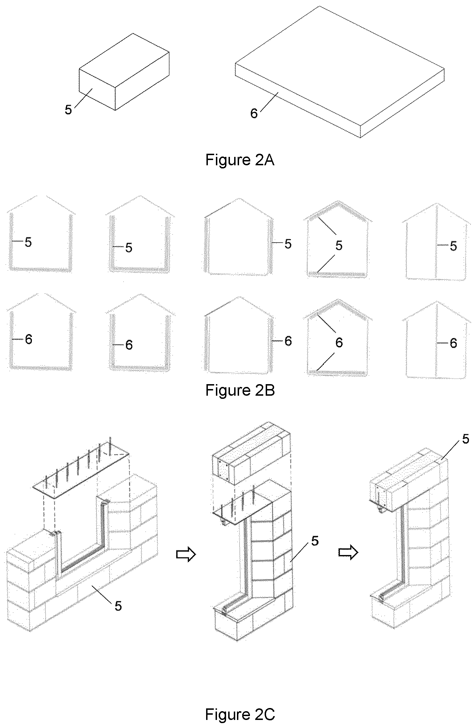

Figure 2A illustrates building products according to the second aspect of the disclosure. In particular, a building block 5 and a building panel 6 prefabricated with the building material 1 are shown. Figure 2B presents different construction structures, from left to right, envelopes, interior insulation of walls, exterior insulation of walls, insulation of roofs and/or floors, and interior compartmentalization using the building block 5 and/or the building panel 6. Figure 2C shows the application of the building blocks 5 in the construction of walls. The building blocks 5 with a larger thickness are used to carry the high mechanical loads at the lower part of the wall, while the building blocks 5 with a smaller thickness are used for the internal and external insulation of the wall. The construction structures shown in Figures 2B and 2C can comprise a single type of building product or the combination of different types of building products. For example, the construction structures can comprise a first wall formed by building products comprising rice husk, water and a binder without any fine aggregate in accordance with an example of the first aspect of the disclosure, and a second wall formed by building products comprising rice husk, water, a binder, and a fine aggregate in accordance with an example of the first aspect of the disclosure. The first wall of the construction structure, e.g. wall, floor and/or roof, has higher mechanical strength than the second wall while the second wall of the construction structure has higher thermal and acoustic insulation properties. The combination of both types of building products grants the resultant construction structure with enough mechanical strength to support mechanical loads and a thermal conductivity enough to thermal isolate the construction. Preferably, the first wall, without fine aggregate, is the inner or interior wall of the construction structure, acting as a more structural wall, and the second wall, comprising fine aggregate, is the outer or exterior wall of the construction structure, being an enclosure. T. Preferably, the second wall is thinner than the first wall.

In some examples, hollow spaces can be incorporated into the building product to form cellular building products, which leads to a more efficient use of materials. Additionally, these hollow spaces can accommodate the injection of other building materials into the building product. For instance, fresh conventional concrete can be cast into the hollow space to improve the mechanical strength of the building product. In some cases, to further improve the mechanical strength of the building product, steel rebars can be inserted through the hollow space of a series of the building products to enhance the integrity of the final structure comprising the building product.

The concept of composite structure has been adopted in construction practice for a long time. Composite structures comprise two different materials that are bound together acting as a single unit. For instance, combining the strong tensile strength of steel with the robust compressive strength of concrete to form a concrete-steel composite structure. In some examples, the building block 5 can be integrated with various other building materials, such as steel and timber, to form composite structures that profit from the advantages of each material.

In an embodiment, the building material 1, as shown in Figure 1, comprises 19.3% rice husks 2, 41.2% binder 3, and 39.5% water 4 by weight. To produce 1 m³ of the building material 1, 110 kg of the rice husks 2, 230kg of the binder 3 and 225L of the water 4 are used. The binder 3 is white cement of type CEM II/B-L 42.5N, comprising 76% clinker and 24% ground limestone by weight. The hardened building material 1 is obtained through the following procedure: first forming a mixture by mixing rice husks, binder and water, secondly pouring the mixture into an open mould, and subsequently allowing the mixture to harden in the mould at ambient temperature to form a body without additional heat supply and/or air ventilation and/or external pressure, then removing the body from the mould and let the body to dry at ambient temperature in contact with air without additional heat supply and/or air ventilation and/or external pressure. The density of the hardened building material 1 in is 350kg/m³, and its compressive strength is measured as 0.8MPa. As per the standard EN 13501-1:2019, the hardened building material 1 is classified as class B regarding its fire behaviour, which signifies that the building material 1 is inflammable. The additional classification in relation to smoke development is S1, meaning that there is very limited smoke developed by the hardened building material 1 under fire. The additional classification in relation to the burning droplets is d₀, referring to no burning droplets or particles from the hardened building material 1 under fire. These classifications are based on the experimental results obtained following EN 11925-2:2021 and EN 13823:2021. The thermal conductivity of the hardened building material 1 is measured as well, which is related to its ability to conduct heat. The hardened building material 1 has a thermal conductivity of 0.069 W/m·K. Another key parameter related to the thermal behaviour of the material is the specific heat, which represents the amount of heat that must be added to one unit of mass of the substance to cause an increase of one unit in temperature. The specific heat of the building material 1 in this example is 1600 J/kg·K.

The building material 1 in this embodiment may be used to prefabricate building blocks. The building blocks can be provided with different dimensions, such as the ones listed in the following table merely by way of non-limiting example. Depending on their dimensions, the different types of building block 5 are denoted as BLOC10, BLOC20, BLOC30, and BLOC40, respectively. The dimensions of building block 5 are expressed as length × height × thickness. Referring to Figures 2A-2C, the length and height of building block 5 are the two directions within the plane of the wall, perpendicular to and along the wall height, respectively, while thickness represents the transverse direction of the wall plane. Subject to the intended application, different building block dimensions can be selected. For instance, for load-bearing walls in low-rise buildings, a thicker building block, such BLOC40, may be preferred, while for insulation purposes, a thinner building block, such as BLOC10, might suffice. Some parameters for the building block 5, including CO₂ emission, thermal phase shifting as well as acoustic reduction index are listed in the table below. The CO₂ emission of a building block is estimated through its life cycle stages, including material acquisition, production process, distribution, usage and waste management at its end of life as well as relevant transportation in each stage of the building block 5. The thermal phase shifting of the building block 5 refers to a delay or a displacement in the timing of thermal responses within the building block 5. According to the standard EN 10140-2:2022, the weighted acoustic reduction index R_{A} of BLOC30 measures 46dB. R_{A} signifies the weighted sound reduction index, indicating the reduction in decibels (dB) when noise traverses a wall composed of BLOC30. Parameters corresponding to different types of building blocks 5 disclosed above are shown in the following table:

| ***Building block*** | *BLOC10* | *BLOC20* | *BLOC30* | *BLOC40* |
|---|---|---|---|---|
| ***Dimension** (cm³)* | *60* × *30* ×*10* | *60* × *30* ×*20* | *60* × *40* ×*30* | *60* × *30* ×*40* |

| ***Usage*** | *Interior*/*exterior insulation of exterior walls, ceilings and floors, interior partition walls* | *Interior*/*exterior insulation of exterior walls, ceilings and floors* | *Exterior enclosing structures* | *Exterior enclosing structures* |
|---|---|---|---|---|
| ***Density** (kg*/*m³)* | *350* | *350* | *350* | *350* |
| ***Compressive strength** (MPa)* | *0.8* | *0.8* | *0.8* | *0.8* |
| ***Fire class*** | *B-S1-d0* | *B-S1-d0* | *B-S1-d0* | *B-S1-d0* |
| ***Thermal conductivity** (W*/*m·K)* | *0.069* | *0.069* | *0.069* | *0.069* |
| ***Specific heat** (J*/*kg·K)* | *1600* | *1600* | *1600* | *1600* |
| ***CO₂ emission** (kgCO₂*/*m²)* | *8.4* | *16.8* | *25.2* | *33.6* |
| ***Thermal phase shifting** (hours)* | *8.4* | *15.1* | *21.9* | >24 |
| ***Acoustic reduction R_{A}** (dB)* | - | - | *46.2* | >*46.2* |

In addition, the building blocks 5 can have different sizes than the blocks disclosed above. For example, the blocks may be slightly thinner than described in order to better adapt the blocks to different construction necessities. For example, the blocks may have a dimension of 59x29x19 cm, 59x29x14 cm or 59x29x9 cm, or others. Blocks having different sizes can be used together in the construction of the same wall, floor and/or roof.

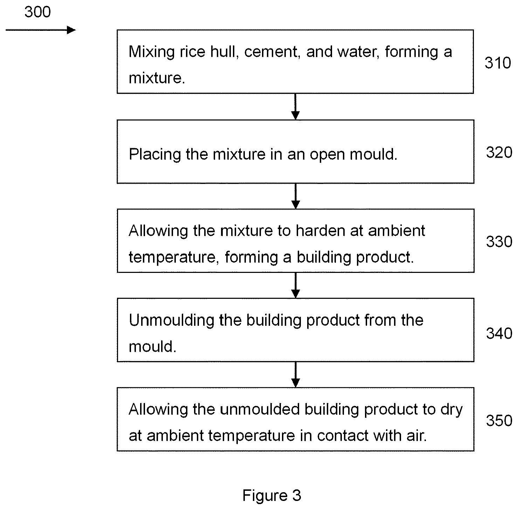

Figure 3 shows a method 300 for obtaining building products according to the third aspect of the disclosure. The method illustrated in Figure 3 comprises the following steps:
Step 310: Mixing rice husk, cement, and water, forming a mixture.
Step 320: Placing the mixture in an open mould.
Step 330: Allowing the mixture to harden at ambient temperature and humidity, forming a building product.
Step 340: Unmoulding the building product from the mould.
Step 350: Allowing the unmoulded building product to dry at ambient temperature in contact with air.

In the step 310, the rice husk, cement, and water (which are the three main components) can be added in various sequences to form the mixture. The mixing can be done manually or by using a machine, either in a container or directly on the floor. For example, the rice husk, cement, and water can be placed into a horizontal shaft mixer with single or double shafts and mixed by the horizontal shaft mixer with single or double shafts. The building material may comprise fine aggregates such as sand. Other components, such as additives, can be added in addition to the three main components. For example, fine aggregates such as sand can be mixed with the main components (rice husk, cement and water) in the step 310.

In the step 320, the mould can be of any shape suitable for placing the mixture and forming concrete products. The height of the mould can be selected to achieve demoulding in the shortest time possible. For instance, it is preferable for the mould to have the same height as the building product to be produced; and if a building product with a height smaller than that of the mould is to be produced, extruded polystyrene can be placed within the mould to compensate for the free height of the mould. A layer of concrete release agent, e.g. oil-based lubricant, may be applied to the interior surfaces of the mould which are in contact with the mixture.

In the step 330, the binder reacts with water and binds the rice husks to transform the mixture from a freshly plastic state to a hardened state. In some examples, the unmoulded building products harden under their self-weight, which means no external pressure is applied to these products. When the hardening process occurs in the rainy season when the relative humidity of air easily reaches for example 90-99%, a ventilator can advantageously be used to maintain the air surrounding the unmoulded building products at a certain level of relative humidity, accelerating the hardening process of the unmoulded building product.

In the step 340, the hardened building product can be demoulded with or without tools. In some examples, the hardened product is taken out from the mould with a compressed air blower. In some examples, the mould is removed from the building product with a hammer. In some other examples, the mould is disposable, which means the mould forms a part of the building product, and therefore the step 340 can be skipped.

In the step 350, the reaction between water and other components continues until completion, further hardening the products and reducing its moisture content. Eventually, the products become sufficiently resistant and ready for use in construction. Depending on the ambient temperature, the drying time might last for 3 days or longer without additional heat supply and/or air ventilation. The dried building products can be cut into different dimensions with the help of any type of mechanical or manual saw.

In one embodiment, the rice husks and the cement are separately loaded into two tanks above a portable drum concrete mixer. Each of the two tanks is equipped with an auger to stir the material, i.e. the rice husks or the cement, inside the tank. A desired amount of water is pumped into a third tank automatically and is discharged first into the drum concrete mixer, followed by the cement and finally the rice husks. The exact weight of each non-liquid component, i.e. the rice husks or the cement, is measured through a scale installed at the base of each tank. After reaching the desired weights, the rice husks and the cement are discharged into the concrete mixer. This process can be automated. For example, the entire loading system can be controlled by an electrical control panel. The binder type and the weight proportion of each component to form the building product is determined based on the desired properties of the building product, for example, a suitable proportion could be 19.3% rice husks, 41.2% white cement of type CEM II/B-L 42.5N, and 39.5% water. The mixture initially exhibits a plastic state. It is poured into a mould with a capacity for one or multiple units of building products, for example, 6 units of building blocks of 60cm × 40cm × 30cm. The mould has the same height as the building block and is placed on a flat surface. At an ambient temperature, the mixture is left in the mould to rest for several hours to form a building product and after this, the building product is ready to be taken out from the mould, i.e. demoulding. In the case of forming building blocks of 60cm × 40cm × 30cm, at an ambient temperature of 20-30°C, the mixture needs to be left in the mould to rest for 1.3 hours, while at an ambient temperature of 0-10°C this time increases to 4 hours. The unmoulded building products are stored on shelves and dried in direct contact with the air. In this example, there is no mechanical ventilation system, external heat supply, or external pressure provided. At ambient temperature, after 3 to 5 days, the building products are ready to be used in the construction of buildings.

Clause 1. Building material comprising rice husk, water, and binder, the rice husk being raw rice husk, wherein the weight ratio between binder and rice husk is between 1:1 and 5:1, the building material having a thermal conductivity of 0.2 W/mK or lower when it reaches a hardened state.

Clause 2. Building material, according to clause 1, wherein the weight ratio between binder and rice husk is between 1.8:1 and 2.9:1.

Clause 3. Building material, according to any of clauses 1 or 2, wherein the weight ratio between binder and rice husk is between 1.8:1 and 2.5:1.

Clause 4. Building material, according to any of clauses 1 or 3, wherein rice husk, water and binder are present in the following proportion in weight: ±5%: 20% of rice husk, 40% of cement, and 40% of water.

Clause 5. Building material, according to any of clauses 1 to 4, wherein the building material has a thermal conductivity of 0.1 W/mK or lower when it reaches a hardened state.

Clause 6. Building material, according to any of clauses 1 to 5, wherein the building material comprises a fine aggregate.

Clause 7. Building material, according to any of clauses 1 to 6, wherein the building material comprises a fine aggregate, and wherein the proportion in weight of the building material is on the range of 8-18% rice husks, 24-36% binder, 32-45% water and 5-30% of fine aggregate, the total added proportion of these components being 100%.

Clause 8. Building material, according to any of clauses 6 or 7, wherein the fine aggregate is sand.

Clause 9. Building material, according to any of clauses 1 to 8, wherein the binder is cement.

Clause 10. Building material, according to clause 9, wherein the binder is cement, and wherein the cement comprises clinker and at least limestone and/or pozzolana.

Clause 11. Building material, according to any of clauses 1 to 10, wherein the binder is cement of type CEM II/B or type CEM IV according to European standard EN 197-1:2011.

Clause 12. Building material, according to any of clauses 9 to 11, wherein the cement is of Class 42.5 or lower according to European standard EN 197-1:2011.

Clause 13. Building material, according to any of clauses 9 to 12, wherein the cement is white cement.

Clause 14. Building material, according to any of clauses 1 to 13, wherein the material comprises an aeration additive.

Clause 15. Building material, according to any of clauses 1 to 14, wherein the material comprises a phase-changing material.

Clause 16. Building product comprising the building material according to any of the previous clauses.

Clause 17. Method for obtaining building products, the method comprising:
- Mixing rice husk, cement, and water, forming a mixture.
- Placing the mixture in an open mould.
- Allowing the mixture to harden at ambient temperature in the open mould, forming a building product.
- Unmoulding the building product from the mould.
- Allowing the unmoulded building product to dry at ambient temperature in contact with air.

Clause 18. Method, according to any of Clause 17, wherein the mixture of rice husk, cement and water is a building material according to any of Clauses 1-15.

Clause 19. Method, according to any of Clause 17 or Clause 18, wherein the step of allowing the unmoulded building block to dry comprises applying controlled mechanical ventilation to the unmoulded building block.

Clause 20. Method, according to any of Clauses 17 to 19, wherein the step of allowing the unmoulded building block to dry comprises applying heat to the unmoulded building block.

Clause 21. Method, according to any of Clauses 17 to 20, wherein the step of allowing the mixture to harden does not comprise applying pressure or compacting the building block.

Clause 22. Method, according to any of clauses 17 to 21, wherein the step of mixing rice husk, cement, and water, forming a mixture comprises mixing rice husk, cement, water and a fine aggregate, e.g. sand.

## Claims

1. Building material comprising rice husk, water, and binder, the rice husk being raw rice husk, wherein the weight ratio between binder and rice husk is between 1:1 and 5:1, the building material having a thermal conductivity of 0.2 W/mK or lower when it reaches a hardened state.

2. Building material, according to Claim 1, wherein the weight ratio between binder and rice husk is between 1.8:1 and 2.5:1.

3. Building material, according to Claim 1, wherein rice husk, water and binder are present in the following proportion in weight, ±5%: 20% of rice husk, 40% of cement, and 40% of water.

4. Building material, according to any of the previous claims, wherein the building material comprises a fine aggregate.

5. Building material, according to any of the previous claims, wherein the binder is cement, and wherein the cement comprises clinker and at least limestone and/or pozzolana.

6. Building material, according to any of the previous claims, wherein the binder is cement of type CEM II/B or type CEM IV according to European standard EN 197-1:2011.

7. Building material, according to any of the previous claims, wherein the cement is of Class 42.5 or lower according to European standard EN 197-1:2011.

8. Building material, according to any of the previous claims, wherein the binder is white cement.

9. Building material, according to any of the previous claims, wherein the material comprises a phase-changing material.

10. Building product comprising the building material according to any of the previous claims.

11. Method for obtaining building products, the method comprising:
- Mixing rice husk, cement, and water, forming a mixture.
- Placing the mixture in an open mould.
- Allowing the mixture to harden at ambient temperature in the open mould, forming a building product.
- Unmoulding the building product from the mould.
- Allowing the unmoulded building product to dry at ambient temperature in contact with air.

12. Method, according to Claim 11, wherein the mixture of rice husk, cement and water is a building material according to any of Claims 1-9.

13. Method, according to Claim 11 or Claim 12, wherein the step of allowing the unmoulded building block to dry comprises applying controlled mechanical ventilation to the unmoulded building block.

14. Method, according to Claims 11 to 13, wherein the step of allowing the unmoulded building block to dry comprises applying heat to the unmoulded building block.

15. Method, according to Claims 11 to 14, wherein the step of allowing the mixture to harden does not comprise applying pressure or compacting the building block.
